# EUROPÄISCHE PATENTSCHRIFT

(11) **EP 1 061 672 B1**
(45) Veröffentlichungstag und Bekanntmachung des Hinweises auf die Patenterteilung: **29.08.2007**
(21) Anmeldenummer: 00112366.0
(22) Anmeldetag: 09.06.2000
(51) Int. Cl.: H04B 7/26

(54) **Synchronisierung von Funkbasisstationen in einem DECT-System**
Synchronization of radio base stations in a DECT system
Synchronisation de stations de base dans un système DECT

(30) Priorität: 12.06.1999 DE 19926830
(43) Veröffentlichungstag der Anmeldung: 20.12.2000
(73) Patentinhaber: Tenovis GmbH & Co. KG, 60362 Frankfurt am Main (DE)
(72) Erfinder: Geiger, Klaus, 85667 Oberpframmern (DE)
(74) Vertreter: Tergau & Pohl Patentanwälte

(56) Entgegenhaltungen:
- EP-A- 0 437 835
- EP-A- 0 634 851
- EP-A- 0 887 960
- DE-A- 19 752 945
- ARIYAVISITAKUL S ET AL: "NETWORK SYNCHRONISATION OF RADIO PORTS IN WIRELESS PERSONAL COMMUNICATIONS" ELECTRONICS LETTERS, IEE STEVENAGE, GB, Bd. 28, Nr. 25, 3. Dezember 1992 (1992-12-03), Seiten 2312-2314, XP000332623 ISSN: 0013-5194

## Beschreibung

### Stand der Technik

Die Erfindung geht aus von einem Verfahren zur Synchronisierung eines ersten und eines zweiten Moduls von einer Zentrale aus nach der Gattung des Hauptanspruchs sowie von einer Zentrale zur Synchronisierung eines ersten und eines zweiten Moduls nach der Gattung des nebengeordneten Vorrichtungsanspruchs. Es sind Telekommunikationssystems, insbesondere gemäß dem DECT-Standard zur drahtlosen Kommunikation bekannt, wobei mehrere Funkbasisstationen betrieben werden, die miteinander über ein zentrales Koppelelement verbunden sind. Hierbei können unterschiedliche lange Signallaufzeiten über die Verbindungen der Funkbasisstationen zum zentralen Koppelement zu Asynchronitäten bei der Koordination verschiedener Funkbasisstationen führen. Auch ist aus der EP 0 634 851 A2 ein Modul bekannt, das ein eingehendes Signal über eine zweite Leitung an eine Zentrale zurücksendet.

Aus dem Dokument "NETWORK SYNCHRONISATION OF RADIO PORTS IN WIRELESS PERSONAL COMMUNICATIONS" von ARIYAVISITAKUL S ET AL, ELECTRONICS LETTERS, IEE STEVENAGE, GB, Bd. 28, Nr. 25, 3. Dezember 1992 (1992-12-03), Seiten 2312-2314, ist ein Verfahren zur zentralisierten Synchronisierung eines ersten Moduls und eines zweiten Moduls durch eine Zentrale bekannt.

### Vorteile der Erfindung

Das erfindungsgemäße Verfahren mit den Merkmalen des Hauptanspruchs und die erfindungsgemäße Zentrale mit den Merkmalen des nebengeordneten Vorrichtungsanspruchs haben demgegenüber den Vorteil, dass Asynchronitäten bei den durch das Koppelelement verbundenen Modulen vermieden werden, indem die Module synchronisiert werden. Dadurch ist es beispielsweise für den Fall, dass die Module Basisstationen in einem Kommunikationssystem gemäß dem DECT-Standard sind, möglich, dass ein mobiles Endgerät einen Wechsel von einer Basisstation zur nächsten Basisstation durchführt, ohne dass dabei Beeinträchtigun-gen, beispielsweise Unterbrechungen, der Kommunikation auftreten. Die Module haben dadurch erfindungsgemäß ein einheitliches Taktgerüst, so dass alle an das zentrale Koppelelement bzw. an die Zentrale angeschlossenen Module ein einheitliches Timing bekommen, obwohl die Module durch unterschiedlich lange Leitungen mit der Zentrale verbunden sind. Erfindungsgemäß ist es somit möglich, dass die Laufzeitunterschiede so kompensiert werden, dass zwischen den Rahmentakten in den einzelnen Modulen lediglich eine Zeitdifferenz auftritt, die kleiner als ein bestimmter unkritischer Wert ist; bei Verwendung des DECT-Standards beispielsweise 3 Mikrosekunden.

Durch die in den Unteransprüchen des Hauptanspruchs und des nebengeordneten Vorrichtungsanspruchs aufgeführten Maßnahmen sind vorteilhafte Weiterbildungen und Verbesserungen des im Hauptanspruch angegebenen Verfahrens und der im nebengeordneten Vorrichtungsanspruch angegebenen Zentrale möglich.

Besonders vorteilhaft ist, dass der erste und der zweite Referenzzeitpunkt zeitlich zusammenfallen. Dadurch ist es möglich, auf einfache Weise eine Synchronisierung der verschiedenen Module zu erreichen.

Weiterhin ist es von Vorteil, dass das dritte Signal am ersten Modul zu einem Synchronisierungszeitpunkt empfangen wird, dass das vierte Signal am zweiten Modul zu einem zweiten Synchronisierungszeitpunkt empfangen wird und dass der erste Synchronisierungszeitpunkt mit dem zweiten Synchronisierungszeitpunkt zusammenfällt. Dadurch ist ein synchronisiertes Verhalten der verschiedenen Module auf sehr einfache Weise möglich.

Durch die in den Unteransprüchen des nebengeordneten Vorrichtungsanspruchs aufgeführten Maßnahmen sind vorteilhafte Weiterbildungen und Verbesserungen der im nebengeordneten Vorrichtungsanspruch angegebenen Zentrale möglich.

Besonders vorteilhaft ist, dass das Mittel zur Synchronisierung ein Zähler ist. Dadurch wird die Synchronisierung in der Zentrale auf einfache Weise realisiert.

Weiterhin ist von Vorteil, dass die Zentrale als ein Sternkoppler zum Anschluß an wenigstens zwei Module, insbesondere in Form von Funkbasisstationen, vorgesehen ist. Dies ermöglicht es, die Module synchron zu betreiben und so eine vorteilhafte Koordination der Module bzw. der Funkbasisstation zu erreichen.

Weiterhin ist es von Vorteil, dass zur Verbindung der Zentrale mit dem ersten Modul eine erste Verbindung, insbesondere ein Lichtwellenleiter, vorgesehen ist. Dadurch kann die Signallaufzeit zwischen der Zentrale und dem ersten Modul durch die Führung des Signals in der Verbindung leicht und genau ermittelt werden. Darüber hinaus ist die Signallaufzeit in der Kabelverbindung konstant.

Weiterhin ist es von Vorteil, dass die erste Verbindung durch eine erste und eine zweite Einzelverbindung realisiert ist, wobei die erste und die zweite Einzelverbindung gleich lang sind und wobei die erste Einzelverbindung zum Aussenden von Signalen durch die Zentrale und die zweite Einzelverbindung zum Empfang von Signalen durch die Zentrale vorgesehen ist. Durch die Trennung der Hin- und Rücksignale zwischen der Zentrale und dem Modul können die gesendeten Signale leicht auseinandergehalten und verarbeitet werden.

### Zeichnung

Ausführungsbeispiele der Erfindung sind in der Zeichnung dargestellt und in der nachfolgenden Beschreibung näher erläutert. Es zeigen
- Fig. 1: ein Telekommunikationssystem mit einer Zentrale und mehreren Modulen,
- Fig. 2: eine Zentrale mit zwei Modulen,
- Fig. 3: ein Ausführungsbeispiel zum zeitlichen Verlauf von Signalen bei einer Synchronisierung.
- Fig. 4: ein weiteres Ausführungsbeispiel zum zeitlichen Verlauf von Signalen bei einer Synchronisierung,
- Fig. 5: die Darstellung der Wirkungsweise eines Zählers und
- Fig. 6: ein Ablaufdiagramm zu einer Synchronisierung.

### Beschreibung der Ausführungsbeispiele

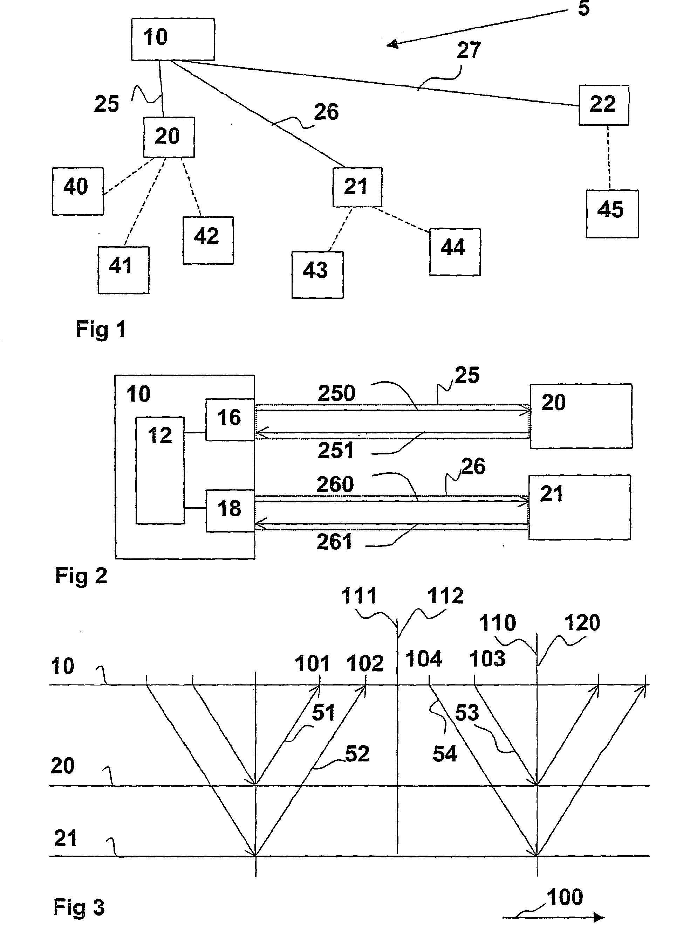

In Fig. 1 ist ein Telekommunikationssystem 5 mit einer Zentrale 10 und einem ersten Modul 20, einem zweiten Modul 21 und einem dritten Modul 22 dargestellt. Die Module 20, 21, 22 stehen in der Figur 1 beispielhaft für eine Vielzahl von Modulen die an die Zentrale 10 angeschlossen sind. Erfindungsgemäß bilden die Zentrale 10 und die Module 20, 21, 22 beispielsweise die festinstallierte Grundstruktur eines Telekommunikationssystems, das zum Betrieb beispielsweise einer Vielzahl von Endgeräten geeignet ist. Erfindungsgemäß umfaßt somit das Telekommunikationssystem außer der Zentrale 10 und den Modulen 20 bis 22 eine Mehrzahl von Endgeräten, für die in der Figur 1 stellvertretend ein erstes Endgerät 40, ein zweites Endgerät 41, ein drittes Endgerät 42, ein viertes Endgerät 43, ein fünftes Endgerät 44 und ein sechstes Endgerät 45 dargestellt ist. Innerhalb des Telekommunikationssystems 5 ist das erste Modul 20 über eine erste Verbindung 25 mit der Zentrale 10 verbunden und entsprechend ist das zweite Modul 21 über eine zweite Verbindung 26 mit der Zentrale 10 verbunden bzw. es ist das dritte Modul 22 über eine dritte Verbindung 27 mit der Zentrale 10 verbunden. Die Verbindungen 25 bis 27 sind erfindungsgemäß insbesondere als drahtgebundene Verbindungen ausgelegt, sie können jedoch auch als drahtlose Verbindungen ausgelegt sein. Weiterhin sind die Verbindungen 25 bis 27 erfindungsgemäß insbesondere als Lichtwellenleiter vorgesehen, wobei auch hier andere Realisierungsmöglichkeiten der Verbindungen 25 bis 27, beispielsweise in Form von Kupferleitungen oder ähnlichem, bestehen. Erfindungsgemäß sind die Endgeräte 40 bis 45 über drahtlose Verbindungen mit den Modulen 20 bis 22 verbunden, wobei in Figur 1 beispielhaft eine Konfiguration des Telekommunikationssystems 5 angegeben ist, bei der das erste Endgerät 40, das zweite Endgerät 41 und das dritte Endgerät 42 mit dem ersten Modul 20, das vierte Endgerät 43 und das fünfte Endgerät 44 mit dem zweiten Modul 21 und das sechste Endgerät 45 mit dem dritten Modul 22 verbunden ist. Die Verbindungen zwischen den Endgeräten 40 bis 45 und den Modulen 20 bis 22 können jedoch auch drahtgebunden ausgeführt sein. Die Konfiguration des Telekommunikationssystems 5 in Figur 1 ist selbstverständlich lediglich als Beispiel gedacht, wobei die Endgeräte 40 bis 45 jeweils wahlweise mit einem beliebigen der Module 20 bis 22 über drahtlose oder drahtgebundene Verbindungen verbunden werden können.

Erfindungsgemäß ist das Telekommunikationssystem 5 insbesondere so ausgelegt, daß es gemäß einem Standard zur Kommunikation und insbesondere gemäß einem Standard zur drahtlosen Kommunikation zwischen den Modulen 20 bis 22 und den Endgeräten 40 bis 45 funktioniert. Hierbei ist erfindungsgemäß insbesondere die Verwendung des DECT-Standards vorgesehen. Die Module 20 bis 22 sind dann als Funkbasisstationen gemäß dem DECT-Standard ausgebildet. Daher wird das erste Modul 20 auch als erste Basisstation 20, das zweite Modul 21 auch als zweite Basisstation 21 und das dritte Modul 22 auch als dritte Basisstation 22 bezeichnet. In der Ausführung des Telekommunikationssystems mit den Basisstationen 20 bis 22 gemäß dem DECT-Standard ist die Zentrale 10 insbesondere als zentrales Koppelelement 10 oder auch als Sternkoppler 10 ausgeführt. Hierbei kann der Sternkoppler 10 auch Aufgaben einer Nebenstellenanlage übernehmen. Es ist erfindungsgemäß insbesondere möglich, daß Endgeräte 40-45 als mobile Endgeräte die Basisstationen 20-22 wechseln. Beispielsweise wird das erste Endgerät 40 von einer von der ersten Basisstation 20 aufgespannten Funkzelle in eine von der zweiten Basisstation 21 aufgespannten Funkzelle gebracht und anstelle der Verbindung zwischen der ersten Basisstation 20 und dem ersten Endgerät 40 eine Verbindung zwischen der zweiten Basisstation 21 und dem ersten Endgerät 40 hergestellt.

In Figur 2 ist die Zentrale 10 mit zwei Modulen 20, 21 etwas detaillierter dargestellt. Die Zentrale 10 umfaßt hierbei einen ersten Zähler 16, einen zweiten Zähler 18 und einen Referenzgeber 12. Der Referenzgeber 12 ist sowohl mit dem ersten Zähler 16 als auch mit dem zweiten Zähler 18 verbunden. Weiterhin ist die Zentrale 10 über die erste Verbindung 25 mit dem ersten Modul und über die zweite Verbindung 26 mit dem zweiten Modul 21 verbunden. Die erste Verbindung 25 ist dabei aus einer ersten Einzelverbindung 250 und einer zweiten Einzelverbindung 251 aufgebaut. Die erste Einzelverbindung 250 dient der Übertragung von Informationen von der Zentrale 10 zur ersten Basisstation 20 und die zweite Einzelverbindung 251 dient umgekehrt der Übertragung von Informationen von der ersten Basisstation 20 zur Zentrale 10. Entsprechend ist die zweite Verbindung 26 aus einer dritten Einzelverbindung 260 und einer vierten Einzelverbindung 261 aufgebaut. Hierbei dient in zur ersten Verbindung 25 analoger Weise die dritte Einzelverbindung 260 der Übertragung von Informationen von der Zentrale 10 zur zweiten Basisstation 21 und die vierte Einzelverbindung 261 dient umgekehrt zur Übertragung von Information von der zweiten Basisstation 21 zur Zentrale 10. Die erste Verbindung 25 ist dabei innerhalb der Basisstation mit dem ersten Zähler 16 verbunden, wobei erfindungsgemäß zwischen dem ersten Zähler 16 und einem Ausgang der Zentrale 10, der der ersten Verbindung 25 entspricht, noch eine nicht dargestellte Schnittstelle vorgesehen sein kann. Mit der Darstellung in Figur 2 soll lediglich angedeutet werden, daß der erste Zähler 16 Informationen, die über die zweite Einzelverbindung 251 an der Zentrale 10 empfangen wurden, verarbeiten kann und daß der erste Zähler 16 Informationen erzeugen kann, die über die erste Einzelverbindung 250 von der Zentrale 10 ausgesendet werden. Der zweite Zähler 18 ist entsprechend dem ersten Zähler 16 mit der zweiten Verbindung 26 verbunden und funktioniert analog.

In Figur 3 ist ein Ausführungsbeispiel zum zeitlichen Verlauf von Signalen bei einer Synchronisierung des ersten Moduls 20 und des zweiten Moduls 21 dargestellt. Der zeitliche Verlauf ist durch einen Pfeil 100 dargestellt. Weiterhin deutet eine erste waagerechte Linie mit dem Bezugszeichen 10 den zeitlichen Verlauf eintreffender und ausgesendeter Signale an der Zentrale 10 an. Das gleiche gilt für zwei weitere waagerechte Linien mit den Bezugszeichen 20 und 21, die den zeitlichen Verlauf eingehender und ausgehender Signale am ersten Modul 20 bzw. am zweiten Modul 21 wiedergeben. Weiterhin deuten in der Figur 3 Pfeile, die von der Basisstation 10 zu dem ersten Modul 20 bzw. zu dem zweiten Modul 21 gerichtet sind, Signale an, die von der Zentrale 10 zu den Modulen 20, 21 gesendet werden. Umgekehrt deuten Pfeile, die von dem ersten Modul 20 bzw. von dem zweiten Modul 21 zur Zentrale 10 gerichtet sind, Signale an, die von den Modulen 20, 21 ausgesendet und an der Zentrale 10 empfangen werden. Dabei wird ein erstes Signal 51 von der ersten Basisstation 20 über die erste Verbindung 25 zur Zentrale 10 gesendet und an der Zentrale 10 zu einem ersten Zeitpunkt 101 empfangen. Weiterhin wird ein zweites Signal 52 von der zweiten Basisstation 21 über die zweite Verbindung 26 zur Zentrale 10 gesendet und zu einem zweiten Zeitpunkt 102 an der Zentrale empfangen. Weiterhin wird ein viertes Signal 54 von der Zentrale 10 zu einem vierten Zeitpunkt 104 ausgesandt und über die zweite Verbindung 26 zur zweiten Basisstation 21 gesendet. Weiterhin wird ein drittes Signal 53 zu einem dritten Zeitpunkt 103 von der Zentrale ausgesendet und von der Zentrale 10 über die erste Verbindung 25 zur ersten Basisstation 20 gesendet. Weiterhin ist in Figur 3 ein erster Referenzzeitpunkt 111 und ein zweiter Referenzzeitpunkt 112 dargestellt. Die beiden Referenzzeitpunkte 111 und 112 fallen in der Figur 3 zeitlich zusammen, wobei der zweite Referenzzeitpunkt 112 das Zeitintervall zwischen dem zweiten Zeitpunkt 102 und dem vierten Zeitpunkt 104 halbiert und wobei der erste Referenzzeitpunkt 111 das Zeitintervall zwischen dem ersten Zeitpunkt 101 und dem dritten Zeitpunkt 103 halbiert. Weiterhin ist in Figur 3 ein erster Synchronisierungszeitpunkt 110 und ein zweiter Synchronisierungszeitpunkt 120 dargestellt. Die beiden Synchronisierungszeitpunkte 110 und 120 fallen zeitlich zusammen. Der erste Synchronisierungszeitpunkt 110 ist der Zeitpunkt, zudem das dritte Signal 53 an der ersten Basisstation 20 empfangen wurde und der zweite Synchronisierungszeitpunkt 120 ist der Zeitpunkt, zudem das vierte Signal 54 an der zweiten Basisstation 21 empfangen wurde. Für eine unterschiedlich lange erste Verbindung 25 und zweite Verbindung 26 muß die Aussendung des dritten und vierten Signals 53, 54 von der Zentrale zu unterschiedlichen Zeitpunkten erfolgen, also umso früher, je länger die Signallaufzeit, bedingt beispielsweise durch ein längeres Kabel, ist. Der erste Zähler 16 ist insbesondere als programmierbarer Logikbaustein realisiert, der als Eingangssignal das erste Signal 51 und als Ausgangssignal das 3. Signal 53 benutzt.

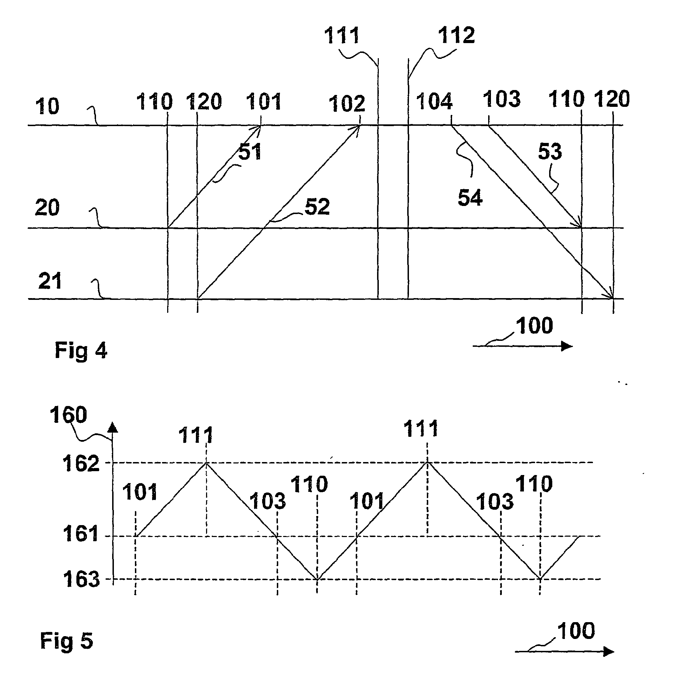

In Figur 4 ist ein weiteres Ausführungsbeispiel zum zeitlichen Verlauf von Signalen bei einer Synchronisierung eines ersten Moduls 20 und eines zweiten Moduls 21 ausgehend von der Zentrale 10 dargestellt. Die Darstellung der Figur 4 entspricht weitgehend der Darstellung der Figur 3. Gleiche Bezugszeichen bezeichnen gleiche Zeitpunkte, Signale oder Komponenten des Kommunikationssystems. In Figur 4 ist im Unterschied zu Figur 3 lediglich ein zeitlicher Offset zwischen den Referenzzeitpunkten 111 und 112 vorgesehen. Somit fallen die Referenzzeitpunkte 111 und 112 zeitlich nicht mehr zusammen. Es ist jedoch weiterhin so, daß der erste Referenzzeitpunkt 111 das Zeitintervall zwischen dem ersten Zeitpunkt 101 und dem dritten Zeitpunkt 103 halbiert und daß der zweite Referenzzeitpunkt 112 das Zeitintervall zwischen dem zweiten Zeitpunkt 102 und dem vierten Zeitpunkt 104 halbiert. Durch die Ungleichzeitigkeit der Referenzzeitpunkte 111 und 112 fallen ebenso die Synchronisierungszeitpunkte 110 und 120 zeitlich nicht mehr zusammen. Für eine Synchronisierung der ersten Basisstation 20 mit der zweiten Basisstation 21 ist die Ungleichzeitigkeit des ersten Referenzzeitpunktes 111 und des zweiten Referenzzeitpunktes 112 und die daraus resultierende Ungleichzeitigkeit der Synchronisierungszeitpunkte 110 und 120 jedoch kein Hindernis, denn es ergibt sich zwischen den Synchronisierungszeitpunkten 110 und 120 lediglich ein zeitlicher Offset der identisch mit dem zwischen den Referenzzeitpunkten 111 und 112 ist. Dieser zeitliche Offset bleibt zeitlich konstant, so daß die Information über den zeitlichen Offset der ersten Basisstation 20 gegenüber der zweiten Basisstation 21 dafür ausreicht, daß sowohl in der ersten Basisstation 20 der Synchronisierungszeitpunkt der zweiten Basisstation 21 - der zweite Synchronisierungszeitpunkt 120 -, beispielsweise durch Addition des konstanten zeitlichen Offsets, ermittelt werden kann und das umgekehrt in der zweiten Basisstation 21 der Referenzzeitpunkt der ersten Basisstation 20 - der erste Synchronisierungszeitpunkt 110 -, beispielsweise durch Subtraktion des konstanten Offsets, ermittelt werden kann.

Figur 5 stellt die Funktionsweise des ersten Zählers 16 dar. Der erste Zähler 16 kann dabei einen Zählerstand 160 aufweisen, der Werte annehmen kann, die von einem nicht dargestellten negativen Maximalwert - das heißt von einem kleinstmöglichen Wert - bis zu einem ebenfalls nicht dargestellten positiven Maximalwert - das heißt bis zu einem größtmöglichen Wert - reichen. In Figur 5 ist durch einen vertikalen Pfeil der Zählerstand 160 des ersten Zählers 16 dargestellt, wobei der Pfeil in die Richtung des positiven Zählerstandes 160 weist. Der Zählerstand 160 kann erfindungsgemäß insbesondere einen ersten Wert 161 einen zweiten Wert 162 und einen dritten Wert 163 annehmen. Gleiche Bezugszeichen aus vorangehenden Figuren bezeichnen wiederum gleiche Signale, Zeitpunkte bzw. Komponenten des Kommunikationssystems. Die durchgezogene Linie in der Figur 5 bezeichnet die zeitliche Veränderung des Zählerstandes 160 zwischen seinem zweiten Wert 162 und seinem dritten Wert 163. Beim ersten Zeitpunkt 101, an dem das erste Signal 51 an der Zentrale 10 empfangen wird, weist der erste Zähler 16 beispielsweise einen Zählerstand 160 auf, der dem ersten Wert 161 entspricht. Im weiteren zeitlichen Verlauf zählt der erste Zähler 16 bis zum Erreichen des ersten Referenzzeitpunktes 111 hoch, das heißt der Zählerstand wird erhöht. Beim ersten Referenzzeitpunkt 111, der beispielsweise dem ersten Zähler 16 von dem Referenzgeber 12 mitgeteilt wird, erreicht der Zählerstand 160 den zweiten Wert 162 und wird umgeschaltet, so daß der erste Zähler 16 nachfolgend abwärts zählt. Beim Erreichen des ersten Wertes 161 vom abwärtszählenden ersten Zähler 16 wird von der Zentrale 10 das dritte Signal 53 zur ersten Basisstation 20 gesendet. Im weiteren Verlauf zählt der erste Zähler 16 weiterhin abwärts bis die Hälfte des Zeitintervalls zwischen zwei aufeinanderfolgenden ersten Referenzzeitpunkten 111 erreicht ist. Dieser Zeitpunkt wird im folgenden auch als Halbierungszeitpunkt bezeichnet. Zum Halbierungszeitpunkt entspricht der Zählerstand 160 dem dritten Wert 163 und der erste Zähler 16 wird umgeschaltet, so daß der erste Zähler 16 in der Folge wieder aufwärts zählt. Erfindungsgemäß entspricht dem Halbierungszeitpunkt - zumindest für den dauerhaften, das heißt einjustierten Betrieb der erfindungsgemäßen Synchronisierung - gerade dem ersten Synchronisierungszeitpunkt 110. Das erste Erreichen des ersten Wertes 161 am abwärtszählenden ersten Zähler 16 nach dem ersten Referenzzeitpunkt 111 dient der Definition des dritten Zeitpunktes 103 zum Absenden des dritten Signals 53 in Abhängigkeit des ersten Referenzzeitpunktes 111. Das dritte Signal 53 kommt am ersten Modul 20 zum ersten Synchronisierungszeitpunkt 110 an und wird erfindungsgemäß dort reflektiert und wiederum als erstes Signal 51 zur Zentrale 10 zurückgesendet. Bei dauerhaftem Betrieb wird das erste Signal 51 gerade zu dem Zeitpunkt, an dem der Zählerstand 160 bei aufwärtszählendem ersten Zähler 16 den ersten Wert 161 annimmt, an der Zentrale 10 empfangen.

Ein entsprechender Ablauf mit dem zweiten Zähler 18 findet in der Zentrale 10 für das zweite Modul 21 statt. Für jedes weitere vorgesehene Modul ist daher in der Zentrale 10 ein Zähler vorhanden. Der in Figur 5 dargestellte zeitliche Verlauf des Zählerstandes 160 ist jedoch nur eine beispielhafte Ausführung für die erfindungsgemäße Funktionsweise der Synchronisierung eines Moduls, beispielsweise kann der Zähler auch beim ersten Zeitpunkt 101 einen Wert annehmen, der dann bis zum ersten Referenzzeitpunkt 111 heruntergezählt werden und daran anschließend wieder hochgezählt wird.

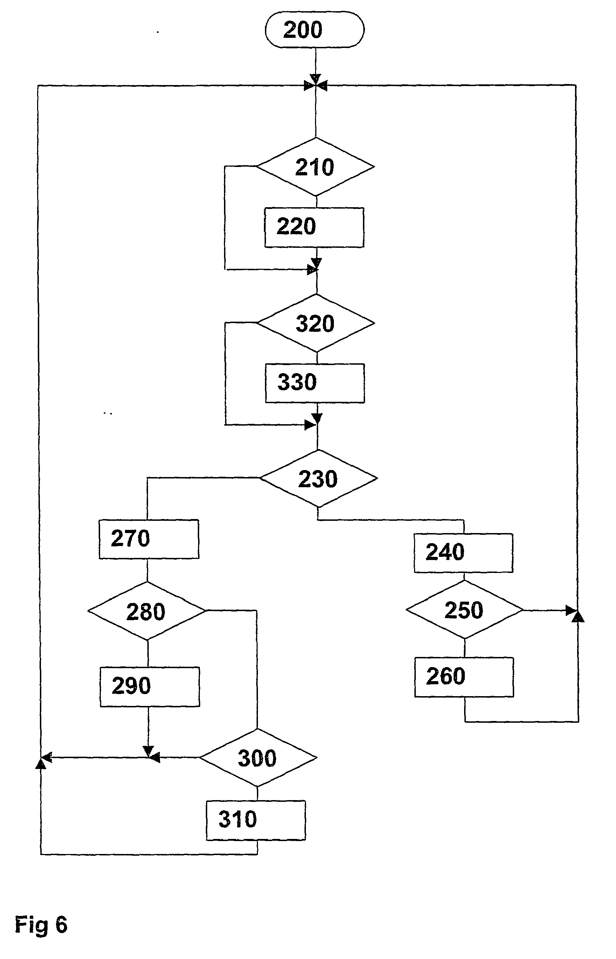

In Figur 6 ist ein Ablaufdiagramm zu der in Figur 3 dargestellten Synchronisierung eines Moduls dargestellt und anhand der Synchronisierung des ersten Moduls 20 mittels des ersten Zählers 16 in der Basisstation 10 erläutert. Während des gesamten Ablaufs der Synchronisierung erhöht sich kontinuiertlich eine Zeitvariable, die den Zeitverlauf angibt. Die Zeitvariable entspricht insbesondere dem Arbeitstakt des Logigbausteins, mittels dem der erfindungsgemäße erste Zähler 16 realisiert ist. Beim Start des Programmablaufs soll die Zeitvariable bei einem positiven Wert oder bei null beginnen. Von einem ersten Programmpunkt 200, der den Start der Synchronisierung angibt, wird zu einem zweiten Programmpunkt 210 verzweigt, bei dem geprüft wird, ob das erste Signal 51 an der Zentrale 10 empfangen wurde. Ist dies der Fall, wird zu einem dritten Programmpunkt 220 verzweigt, andernfalls wird zu einem dreizehnten Programmpunkt 320 verzweigt. Beim dritten Programmpunkt 220 wird der Zählerstand 160 halbiert. Beim dreizehnten Programmpunkt 320 wird geprüft, ob die Zeitvariable bereits einen Wert erreicht hat, der größer oder gleich dem Zeitintervall zwischen zwei aufeinanderfolgenden ersten Referenzzeitpunkten 111 entspricht. Ist dies der Fall, wird zu einem vierzehnten Programmpunkt 330 verzweigt, andernfalls wird zu einem vierten Programmpunkt 230 verzweigt. Beim viertzehnten Programmpunkt 330 wird die Zeitvariable gleich null gesetzt. Die Zeitvariable nimmt somit einen Wert zwischen null und dem Zeitintervall zwischen zwei aufeinanderfolgenden ersten Referenzzeitpunkten 111 an. Beim vierten Programmpunkt 230 wird geprüft, ob der erste Referenzzeitpunkt 111 erreicht ist oder nicht, das heißt, ob der Referenzgeber 12 die Information über das Erreichen des ersten Referenzzeitpunktes 111 zum ersten Zähler 16 gesendet hat oder nicht. Die Beziehung zwischen dem ersten Referenzzeitpunkt 111 und der Zeitvariable ist derart, daß das Erreichen des ersten Referenzzeitpunktes 111 mit einem Wert der Zeitvariable zusammenfällt, der der Hälfte des Maximalwertes der Zeitvariable, das heißt der Hälfte des Zeitintervalls zwischen zwei aufeinanderfolgenden ersten Referenzzeitpunkte 111, entspricht. Falls im zeitlichen Verlauf der erste Referenzzeitpunkt 111 erreicht ist, wird zu einem achten Programmpunkt 270 verzweigt, andernfalls wird zu einem fünften Programmpunkt 240 verzweigt. Beim fünften Programmpunkt 240 wird der Zählerstand 160 inkrementiert, daß heißt - in der Regel um eine Zählereinheit - erhöht, und anschließend zu einem sechsten Programmpunkt 250 verzweigt. Beim sechsten Programmpunkt 250 wird geprüft, ob der Zählerstand 160 dem maximalen positiven Wert entspricht, den der erste Zähler 16 annehmen kann. Ist dies der Fall, wird zu einem siebten Programmpunkt 260 verzweigt, andernfalls wird zu dem zweiten Programmpunkt 210 verzweigt. Beim siebten Programmpunkt 260 wird der Zählerstand 160 halbiert, und das Programm verzweigt ebenfalls zum zweiten Programmpunkt 210. Beim achten Programmpunkt 270 wird der Zählerstand dekrementiert, daß heißt - in der Regel um eine Zählereinheit - erniedrigt, und zu einem neunten Programmpunkt 280 verzweigt. Beim neunten Programmpunkt 280 wird geprüft, ob der Zählerstand dem maximalen negativen Wert entspricht, den der erste Zähler 16 annehmen kann. Ist dies der Fall, wird zu einem zehnten Programmpunkt 290 verzweigt, ansonsten wird zu einem elften Programmpunkt 300 verzweigt. Beim zehnten Programmpunkt 290 wird der Zählerstand 160 halbiert, das heißt der Zählerstand 160 entspricht nun vom Betrag her der Hälfte des maximalen negativen Wertes und der Zählerstand 160 ist nach der Halbierung weiterhin negativ. Vom zehnte Programmpunkt 290 aus wird zum zweiten Programmpunkt 210 verzweigt. Beim elften Programmpunkt 300 wird geprüft, ob der Zählerstand 160 gleich null ist. Ist dies der Fall wird zu einem zwölften Programmpunkt 310 verzweigt, ansonsten wird zu dem zweiten Programmpunkt 210 verzweigt. Beim zwölften Programmpunkt 310 wird von der Zentrale 10 das dritte Signal 53 zur ersten Basisstation 20 ausgesendet. Vom zwölften Programmpunkt 310 wird wieder zum zweiten Programmpunkt 210 verzweigt. Dadurch wiederholt sich der Vorgang dauerhaft. Erfindungsgemäß ist es selbstverständlich möglich vorzusehen, daß der Synchronisierungsprozeß an einer beliebigen Stelle des Ablaufdiagramms unterbrochen wird und somit keine Synchronisierung, beispielsweise der ersten Basisstation 20, durchgeführt wird. Jedoch ist die Synchronisierung dafür vorgesehen, dauerhaft durchgeführt zu werden. Im dauerhaften Betriebszustand der Synchronisierung entspricht die Verzweigung zum zwölften Programmpunkt 310 dem Erreichen des dritten Zeitpunktes 103.

Im dauerhaften Betrieb ist der Zählerstand 160 beim ersten Zeitpunkt 101, das heißt beim dritten Programmpunkt 220, gleich null und zählt durch den fünften und sechsten Programmpunkt 240, 250 solange aufwärts bis beim vierten Programmpunkt 230 der erste Referenzzeitpunkt 111 erreicht ist, bei dem der Zählerstand 160 den zweiten Wert 162 annimmt. Anschließend zählt der erste Zähler 16 mittels des achten, neunten und elften Programmpunktes 270, 280, 300 abwärts bis die Zeitvariable beim vierzehnten Programmpunkt 330 auf null gesetzt wird. Dies fällt zeitlich damit zusammen, daß der Zählerstand 160 den (negativen) dritten Wert 163 annimmt. Anschließend zählt der Zähler 16 wieder aufwärts. Während des Abwärtszählens wird beim Erreichen des ersten Wertes 161 durch den elften und zwöften Programmpunkt 300, 310 das dritte Signal 53 von der Zentrale 10 gesendet.

Erfindungsgemäß muß das Zeitintervall zwischen zwei Referenzzeitpunkten 111, 112 größer sein als die Signallaufzeit von der Zentrale 10 zu einem beliebigen zu synchronisierenden Modul 20, 21, 22 und wieder zurück zur Zentrale 10. Bei Gleichheit der Signallaufzeit für beide Wege - von der Zentrale zum Modul und vom Modul zur Zentrale - bedeutet dies, daß die Hälfte des Zeitintervalls zwischen zwei Referenzzeitpunkten 111, 112 größer als die Signallaufzeit zwischen der Zentrale 10 und dem am weitesten entfernten beziehungsweise dem über die längste Verbindung angebundenen Modul 20, 21, 22 sein muß.

Die Größe des Zählers hängt von der gewünschten zeitlichen Auflösung bzw. dem zur Verfügung stehenden Takt ab. Der Zählbereich geht immer vom negativen Maximalwert bis zum positiven Maximalwert, wobei diese beiden Maximalwerte erfindungsgemäß insbesondere betragsmäßig gleich sind. Das Zeitintervall zwischen zwei Referenzzeitpunkten 111, 112 könnte zum Beispiel 250 Mikrosekunden - zwei Rahmen gemäß dem DECT-Standard - oder ein Vielfaches davon sein. Nachdem die Frequenz der Takte in allen Modulen durch normale, das heißt in den Modulen lokal vorhandene, Zeitgeber, beispielsweise PLL oder Schwingungsquarze, exakt gleich ist, lassen sich die dazwischenliegenden Rahmensynchronimpulse lokal erzeugen. Somit beginnen beispielsweise bei einem erfindungsgemäßen DECT-System sowohl der Rahmensynchronimpuls (alle 125 Mikrosekunden) als auch der DECT-Rahmenimpuls (alle 160 Millisekunden) für alle Module 20-22 gleichzeitig.

Die Datenübertragung zwischen den einzelnen Modulen erfolgt erfindungsgemäß über Lichtwellenleiter in serieller Form. Es gibt ein zentrales Koppelelement, an das alle Module über je zwei gleichlange Lichtwellenleiter (einen für jede Richtung) angeschlossen sind.

## Patentansprüche

1. Verfahren zur Synchronisierung eines ersten Moduls (20) und eines zweiten Moduls (21) von einer Zentrale (10) aus, **dadurch gekennzeichnet, daß** vom ersten Modul (20) ein erstes Signal (51) gesendet wird, das zu einem ersten Zeitpunkt (101) von der Zentrale (10) empfangen wird, daß vom zweiten Modul (21) ein zweites Signal (52) gesendet wird, das zu einem zweiten Zeitpunkt (102) von der Zentrale (10) empfangen wird, daß von der Zentrale (10) ein drittes Signal (53) zu einem dritten Zeitpunkt (103) zum ersten Modul (20) ausgesendet wird, daß von der Zentrale (10) ein viertes Signal (54) zu einem vierten Zeitpunkt (104) zum zweiten Modul (21) ausgesendet wird, daß in der Zentrale (10) der dritte Zeitpunkt (103) in Abhängigkeit des ersten Zeitpunktes (101) und der vierte Zeitpunkt (104) in Abhängigkeit des zweiten Zeitpunktes (102) bestimmt wird, daß ein erster Referenzzeitpunkt (111) zur Bestimmung des dritten Zeitpunktes (103) und ein zweiter Referenzzeitpunkt (112) zur Bestimmung des vierten Zeitpunktes (104) herangezogen wird, daß der erste und der zweite Referenzzeitpunkt (111, 112) in einer vorgegebenen zeitlichen Relation zueinander stehen, daß der erste Referenzzeitpunkt (111) das Zeitintervall zwischen dem ersten und dem dritten Zeitpunkt (101, 103) halbiert und daß der zweite Referenzzeitpunkt (112) das Zeitintervall zwischen dem zweiten und dem vierten Zeitpunkt (102, 104) halbiert.

2. Verfahren nach Anspruch 1, **dadurch gekennzeichnet, daß** der erste und der zweite Referenzzeitpunkt (111, 112) zeitlich zusammenfallen.

3. Verfahren nach Anspruch 1 oder 2, **dadurch gekennzeichnet, daß** das dritte Signal (53) am ersten Modul (20) zu einem ersten Synchronisierungszeitpunkt (110) empfangen wird, daß das vierte Signal (54) am zweiten Modul (21) zu einem zweiten Synchronisierungszeitpunkt (120) empfangen wird und daß der erste Synchronisierungszeitpunkt (110) mit dem zweiten Synchronisierungszeitpunkt (120) zusammenfällt.

4. Zentrale (10) zur Synchronisierung eines ersten Moduls (20) und eines zweiten Moduls (21), **dadurch gekennzeichnet, daß** vom ersten Modul (20) ein erstes Signal (51) gesendet wird, das zu einem ersten Zeitpunkt (101) von der Zentrale (10) empfangen wird, daß vom zweiten Modul (21) ein zweites Signal (52) gesendet wird, das zu einem zweiten Zeitpunkt (102) von der Zentrale (10) empfangen wird, daß von der Zentrale (10) ein drittes Signal (53) zu einem dritten Zeitpunkt (103) zum ersten Modul (20) ausgesendet wird, daß von der Zentrale (10) ein viertes Signal (54) zu einem vierten Zeitpunkt (104) zum zweiten Modul (21) ausgesendet wird, daß die Zentrale (10) ein Mittel zur Synchronisierung (16, 18) aufweist, den dritten Zeitpunkt (103) in Abhängigkeit des ersten Zeitpunktes (101) und den vierten Zeitpunkt (104) in Abhängigkeit des zweiten Zeitpunktes (102) zu bestimmen, daß das Mittel zur Synchronisierung (16, 18) dazu geeignet ist, einen ersten Referenzzeitpunkt (111) zur Bestimmung des dritten Zeitpunktes (103) und einen zweiten Referenzzeitpunkt (112) zur Bestimmung des vierten Zeitpunktes (104) heranzuziehen, daß der erste und der zweite Referenzzeitpunkt (111, 112) in einer vorgegebenen zeitlichen Relation zueinander stehen, daß das Mittel zur Synchronisierung (16, 18) derart vorgesehen ist, daß der erste Referenzzeitpunkt (111) das Zeitintervall zwischen dem ersten Zeitpunkt (101) und dem dritten Zeitpunkt (103) halbiert und daß der zweite Referenzzeitpunkt (112) das Zeitintervall zwischen dem zweiten Zeitpunkt (102) und dem vierten Zeitpunkt (104) halbiert.

5. Zentrale (10) nach Anspruch 4, **dadurch gekennzeichnet, daß** der erste Referenzzeitpunkt (111) und der zweite Referenzzeitpunkt (112) zeitlich zusammenfallen.

6. Zentrale (10) nach Anspruch 4 oder 5, **dadurch gekennzeichnet, daß** das Mittel zur Synchronisierung (16, 18) ein Zähler ist.

7. Zentrale (10) nach einem der Ansprüche 4-6, **dadurch gekennzeichnet, daß** die Zentrale (10) als ein Sternkoppler zum Anschluß an wenigstens zwei Module (20, 21, 22), insbesondere in Form von Funkbasisstationen, vorgesehen ist.

8. Zentrale (10) nach einem der Ansprüche 4-7, **dadurch gekennzeichnet, daß** zur Verbindung der Zentrale (10) mit dem ersten Modul (20) eine erste Verbindung (25), insbesondere ein Lichtwellenleiter, vorgesehen ist.

9. Zentrale nach Anspruch 8, **dadurch gekennzeichnet, daß** die erste Verbindung (25) durch eine erste und eine zweite Einzelverbindung (250, 251) realisiert ist, wobei die erste und die zweite Einzelverbindung (250, 251) gleich lang sind und wobei die erste Einzelverbindung (250) zum Aussenden von Signalen durch die Zentrale (10) und die zweite Einzelverbindung (251) zum Empfangen von Signalen durch die Zentrale (10) vorgesehen ist.

## Claims

1. Method for synchronizing a first module (20) and a second module (21) from a central unit (10), **characterized in that** the first module (20) sends a first signal (51) which is received by the central unit (10) at a first moment (101), that the second module (21) sends a second signal (52) which is received by the central unit (10) at a second moment (102), that the central unit (10) sends a third signal (53) to the first module (20) at a third moment (103), that the central unit (10) sends a fourth signal (54) to the second module (21) at a fourth moment (104), that in the central unit (10), the third moment (103) is determined as a function of the first moment (101) and the fourth moment (104), as a function of the second moment (102), that a first reference moment (111) is used for determining the third moment (103) and a second reference moment (112), for determining the fourth moment (104), that there is a preset time relationship between the first and second reference moments (111, 112), that the first reference moment (111) halves the time interval between the first and third moments (101, 103), and that the second reference moment (112) halves the time interval between the second and fourth moments (102, 104).

2. Method according to claim 1, **characterized in that** the first and second reference moments (111, 112) coincide in time.

3. Method according to claim 1 or 2, **characterized in that** the third signal (53) is received by the first module (20) at a first synchronization moment (110), that the fourth signal (54) is received by the second module (21) at a second synchronization moment (120), and that the first synchronization moment (110) coincides in time with the second synchronization moment (120).

4. Central unit (10) for synchronizing a first module (20) and a second module (21), **characterized in that** the first module (20) sends a first signal (51) which is received by the central unit (10) at a first moment (101), that the second module (21) sends a second signal (52) which is received by the central unit (10) at a second moment (102), that the central unit (10) sends a third signal (53) to the first module (20) at a third moment (103), that the central unit (10) sends a fourth signal (54) to the second module (21) at a fourth moment (104), that the central unit (10) includes a synchronization means (16, 18) for determining the third moment (103) as a function of the first moment (101) and the fourth moment (104), as a function of the second moment (102), that the synchronization means (16, 18) is suitable for using a first reference moment (111) for determining the third moment (103) and a second reference moment (112), for determining the fourth moment (104), that there is a preset time relationship between the first and second reference moments (111, 112), that the synchronization means (16, 18) is provided in such a way that the first reference moment (111) halves the time interval between the first moment (101) and the third moment (103), and that the second reference moment (112) halves the time interval between the second moment (102) and the fourth moment (104).

5. Central unit (10) according to claim 4, **characterized in that** the first reference moment (111) and the second reference moments (112) coincide in time.

6. Central unit (10) according to claim 4 or 5, **characterized in that** the synchronization means (16, 18) is a counter.

7. Central unit (10) according to any of claims 4 to 6, **characterized in that** the central unit (10) is provided in the form of a star coupler for connection to at least two modules (20, 21, 22), in particular in the form of radio base stations.

8. Central unit (10) according to any of claims 4 to 7, **characterized in that** a first connection (25), in particular an optical wave guide, is provided for connecting the central unit (10) with the first module (20).

9. Central unit (10) according to claim 8, **characterized in that** the first connection (25) is realized through a first and second single connections (250, 251), the first and second single connections (250, 251) being of equal length and the first single connection (250) being provided for sending signals through the central unit (10) and the second single connection (251), for receiving signals through the central unit (10).

## Revendications

1. Méthode pour synchroniser un premier module (20) et un second module (21) d'une unité centrale (10), **caractérisée en ce que** le premier module (20) emet un premier signal (51) qui est reçu par l'unité centrale (10) à un premier moment (101), que le second module (21) émet un second signal (52) qui est reçu l'unité centrale (10) à un second moment (102), que l'unité centrale (10) emet un troisième signal (53) au premier module (20) à un troisième moment (103), que l'unité centrale (10) emet un quatrième signal (54) au second module (21) à un quatrième moment (104), que le troisième moment (103) est déterminé en fonction du premier moment (101) et le quatrième moment (104) en fonction du second moment (102) dans l'unité centrale (10), qu'un premier moment de référence (111) est utilisé pour déterminer le troisième moment (103) et un second moment de référence (112), pour déterminer le quatrième moment (104), qu'il existe une relation de temps prédéfinie entre le premier et le second moment de référence (111, 112), que le premier moment de référence (111) partage en deux parties égales l'intervalle de temps entre le premier et le troisième moment (101, 103), et que le second moment de référence (112) partage en deux parties égales l'intervalle de temps entre le second et le quatrième moment (102, 104).

2. Méthode selon la revendication 1, **caractérisée en ce que** le premier et le second moment de référence (111, 112) coïncident dans le temps.

3. Méthode selon la revendication 1 ou 2, **caractérisée en ce que** le troisième signal (53) est reçu par le premier module (20) à un premier moment de synchronisation (110), que le quatrième signal (54) est reçu par le second module (21) à un second moment de synchronisation (120), et que le premier moment de synchronisation (110) coïncide dans le temps avec le second moment de synchronisation (120).

4. Unité centrale (10) pour synchroniser un premier module (20) et un second module (21), **caractérisée en ce que** le premier module (20) emet un premier signal (51) qui est reçu par l'unité centrale (10) à un premier moment (101), que le second module (21) emet un second signal (52) qui est reçu par l'unité centrale (10) à un second moment (102), que l'unité centrale (10) emet un troisième signal (53) au premier module (20) à un troisième moment (103), que l'unité centrale (10) emet un quatrième signal (54) au second module (21) à un quatrième moment (104), que l'unité centrale (10) comprend un moyen de synchronisation (16, 18) pour déterminer le troisième moment (103) en fonction du premier moment (101) et le quatrième moment (104) en fonction du second moment (102), que le moyen de synchronisation (16, 18) est approprié à utiliser un premier moment de référence (111) pour déterminer le troisième moment (103) et un second moment de référence (112) pour déterminer le quatrième moment (104), qu'il existe une relation de temps prédéfinie entre le premier et le second moment de référence (111, 112), que le moyen de synchronisation (16, 18) est prévu de façon que le premier moment de référence (111) partage en deux parties égales l'intervalle de temps entre le premier moment (101) et le troisième moment (103), et que le second moment de référence (112) partage en deux parties égales l'intervalle de temps entre le second moment (102) et le quatrième moment (104).

5. Unité centrale (10) selon la revendication 4, **caractérisée en ce que** le premier moment de référence (111) et le second moment de références (112) coïncident dans le temps.

6. Unité centrale (10) selon la revendication 4 ou 5, **caractérisée en ce que** le moyen de synchronisation (16, 18) est un compteur.

7. Unité centrale (10) selon l'une quelconque des revendications 4 à 6, **caractérisée en ce que** l'unité centrale (10) est prévue sous forme d'un coupleur en étoile pour connexion à au moins deux modules (20, 21, 22), en particulier sous forme de stations-radio de base.

8. Unité centrale (10) selon l'une quelconque des revendications 4 à 7, **caractérisée en ce qu'**une première connexion (25), en particulier un guide d'ondes optiques, est prévue pour connecter l'unité centrale (10) avec le premier module (20).

9. Unité centrale (10) selon la revendication 8, **caractérisée en ce que** la première connexion (25) est réalisée par une première et une seconde connexion individuelle (250, 251), la première et la seconde connexion individuelle (250, 251) étant de la même longueur et la première connexion individuelle (250) étant prévue pour émettre des signaux au moyen de l'unité centrale (10) et la seconde connexion individuelle (251) pour recevoir des signaux au moyen de l'unité centrale (10).
